# EUROPÄISCHE PATENTANMELDUNG

(11) **EP 4 826 484 A1**
(43) Veröffentlichungstag der Anmeldung: **21.10.2026**
(21) Anmeldenummer: 25170702.2
(22) Anmeldetag: 15.04.2025
(51) Int. Cl.: G05D 9/12

(54) **VERFAHREN ZUM BETREIBEN EINES PROZESSSYSTEMS ZUR DRUCKPOLSTERREGELUNG ODER FÜLLSTANDSREGELUNG IN EINEM BEHÄLTER SOWIE PROZESSSYSTEM**

(71) Anmelder: Bürkert Werke GmbH & Co. KG, 74653 Ingelfingen (DE)
(72) Erfinder: HEGMANN, Julian, 74653 Ingelfingen (DE); KURZ, Tobias, 74653 Ingelfingen (DE); BECK, Klaus, 74653 Ingelfingen (DE)
(74) Vertreter: Prinz & Partner mbB

(57) **Zusammenfassung**

Es wird ein Verfahren zum Betreiben eines Prozesssystems (10) zur Druckpolsterregelung oder Füllstandsregelung in einem Behälter (12) angegeben, in dem ein Fluid, insbesondere eine Flüssigkeit und/oder ein Gas, aufgenommen ist, mit einem Regler (14) zum Einstellen einer Führungsgröße, insbesondere eines Drucks eines Druckpolsters im Behälter (12) oder eines Füllstands eines in dem Behälter (12) aufgenommenen Fluids, wobei der Regler zumindest ein P-Glied (24), über das ein Proportionalanteil einer Stellgröße des Reglers (14) eingestellt wird, und ein I-Glied (28) aufweist, über das ein Integralanteil der Stellgröße des Reglers (14) eingestellt wird. Das Prozesssystem (10) wird wahlweise in einem ersten, proportionalen Betriebsmodus oder in einem zweiten, integralen Betriebsmodus betrieben. Das I-Glied (28) des Reglers (14) leistet keinen Beitrag zur Stellgröße des Reglers (14), wenn das Prozesssystem (10) in dem zweiten, integralen Betriebsmodus betrieben wird, und das I-Glied (28) des Reglers (14) leistet einen Beitrag zur Stellgröße des Reglers (14), wenn das Prozesssystem (10) in dem ersten, proportionalen Betriebsmodus betrieben wird. Des Weiteren wird ein Prozesssystem (10) angegeben.

## Beschreibung

Die Erfindung betrifft ein Verfahren zum Betreiben eines Prozesssystems zur Druckpolsterregelung oder Füllstandsregelung in einem Behälter, in dem ein Fluid, beispielsweise eine Flüssigkeit und/oder ein Gas, aufgenommen ist. Ferner betrifft die Erfindung ein Prozesssystem.

Bei der Regelung industrieller Prozesse mittels einer Druckpolsterregelung oder der Füllstandsregelung können unterschiedliche Betriebsmodi auftreten. Beispielsweise kann eine Druckpolsterregelung oder eine Füllstandsregelung mit permanenter Entnahme von Fluid erfolgen, was einem proportionalen Prozesstyp entspricht. Alternativ kann eine Druckpolsterregelung oder eine Füllstandsregelung ohne permanente Entnahme erfolgen, was einem integralen Prozesstyp entspricht.

Bei einem proportionalen Prozesstyp lässt sich mit einem PID-Regler die beste Regelgüte erzielen, während bei einem integralen Prozesstyp mit einem PD-Regler die beste Regelgüte erzielt werden kann.

Bei Prozesssystemen, bei denen beide Betriebsmodi, also eine Druckpolsterregelung oder eine Füllstandsregelung mit permanenter Entnahme sowie eine Druckpolsterregelung oder eine Füllstandsregelung ohne permanente Entnahme vorliegen, wird üblicherweise der Regler verwendet, der zu demjenigen Betriebsmodus passt, der am häufigsten aktiv ist oder bei dem die bessere Regelgüte gewünscht ist. Für den anderen Betriebsmodus wird eine verminderte Regelgüte in Kauf genommen.

Es ist jedoch wünschenswert, für beide Betriebsmodi eine optimale Regelgüte zu erreichen. Insofern ist es die Aufgabe der vorliegenden Erfindung, ein optimiertes Verfahren zum Betreiben eines Prozesssystems zur Druckpolsterregelung oder Füllstandsregelung bzw. ein optimiertes Prozesssystem anzugeben.

Die Aufgabe wird erfindungsgemäß gelöst durch ein Verfahren zum Betreiben eines Prozesssystems zur Druckpolsterregelung oder Füllstandsregelung in einem Behälter, in dem ein Fluid, beispielsweise eine Flüssigkeit und/oder ein Gas, aufgenommen ist, mit einem Regler zum Einstellen einer Führungsgröße, insbesondere eines Drucks eines Druckpolsters im Behälter oder eines Füllstands eines in dem Behälter aufgenommenen Fluids, beispielsweise einer Flüssigkeit oder eines Gases. Der Regler weist zumindest ein P-Glied, über das ein Proportionalanteil einer Stellgröße des Reglers eingestellt wird, und ein I-Glied auf, über das ein Integralanteil der Stellgröße des Reglers eingestellt wird. Das Prozesssystem wird wahlweise in einem ersten, proportionalen Betriebsmodus oder in einem zweiten, integralen Betriebsmodus betrieben. Das I-Glied des Reglers leistet keinen Beitrag zur Stellgröße des Reglers, wenn das Prozesssystem in dem zweiten, integralen Betriebsmodus betrieben wird, und das I-Glied des Reglers leistet einen Beitrag zur Stellgröße des Reglers, wenn das Prozesssystem in dem ersten, proportionalen Betriebsmodus betrieben wird.

Beispielsweise kann das I-Glied des Reglers wahlweise eingeschaltet oder ausgeschaltet werden, sodass das I-Glied des Reglers einen Beitrag zur Stellgröße des Reglers leistet bzw. keinen Beitrag leistet. Der Regler wirkt also wie ein PID-Regler, wenn das I-Glied eingeschaltet ist, und wie ein PD-Regler, wenn das I-Glied ausgeschaltet ist. Der proportionale Anteil (P-Glied) des Reglers sorgt dafür, dass das System schnell auf Abweichungen von der Sollgröße reagieren kann, während der integrale Anteil (I-Glied) dazu beiträgt, dauerhafte Abweichungen (bleibende Regelabweichungen) zu eliminieren.

Mittels des erfindungsgemäßen Verfahrens wird der Vorteil erreicht, dass das Regelverhalten optimiert ist, indem immer die am besten zum jeweiligen Betriebsmodus passende Regelstruktur eingestellt ist, sodass die bestmögliche Regelgüte erreicht werden kann. In anderen Worten kann flexibel auf unterschiedliche Prozessbedingungen reagiert werden.

Konkret wird ein Überschwingen des Stellsignals beim Einregeln vermieden und bei einer Entnahme bzw. beim Zuführen von Fluid in den Behälter lässt sich das Sollniveau ohne Regelabweichung ausregeln.

Das Einschalten bzw. Ausschalten des I-Glieds erfolgt beispielsweise automatisch.

Wenn das I-Glied eingeschaltet ist, reagiert der Regler nicht nur auf aktuelle Abweichungen, sondern auch auf summierte Abweichungen über die Zeit, um dauerhafte Regelabweichungen zu korrigieren.

Anwendungsfälle der Erfindung sind beispielsweise das sogenannte Tank-Blanketing, bei dem eine Gasdecke (oftmals Stickstoff) über einem (anderen) Fluid, beispielsweise einer Flüssigkeit, in einem geschlossenen Behälter gehalten wird, oder das Regeln eines Füllstands in einem geschlossenen oder offenen Behälter, beispielsweise in Gießbehältern in Großgärtnereien. Es sind jedoch auch noch weitere Anwendungsfälle denkbar, beispielsweise ein Anwendungsfall, in dem ein Behälter lediglich Gas enthält und der Gasdruck im Behälter geregelt wird.

Gemäß einem Aspekt wird in dem ersten, proportionalen Betriebsmodus Fluid, aus dem Behälter entnommen oder dem Behälter zugeführt, während die Führungsgröße durch die Regelung konstant gehalten wird, und in dem zweiten, integralen Betriebsmodus erfolgt keine Entnahme aus dem Behälter. Die Regelung der Führungsgröße im proportionalen Betriebsmodus sichert die Stabilisierung der Regelparameter, insbesondere von Druck oder Füllstand, während der Entnahme. Dadurch wird sichergestellt, dass der Prozess nicht durch Schwankungen des Drucks oder des Füllstands beeinträchtigt wird.

In dem ersten Betriebsmodus wird beispielsweise der Druck des Druckpolsters im Behälter während der Fluidentnahme durch die Regelung konstant gehalten und im zweiten Betriebsmodus wird der Druck des Druckpolsters im Behälter bei gleichbleibendem Füllstand geregelt, insbesondere wobei im zweiten Betriebsmodus ein Druckniveau verändert wird. Ein konstanter Druck des Druckpolsters während einer Fluidentnahme ist essenziell, um einen kontrollierten Entnahmeprozess zu gewährleisten. Durch die Aufrechterhaltung eines konstanten Drucks trotz Fluidentnahme wird sichergestellt, dass Prozesse stabil und vorhersehbar bleiben. Im zweiten Betriebsmodus lassen sich durch die Änderungen des Druckniveaus bei konstantem Füllstand die Bedingungen innerhalb des Behälters optimal an nachfolgende Prozesse anpassen.

Eine Änderung des Druckniveaus im zweiten Betriebsmodus erfolgt beispielsweise beim Tank-Blanketing, wenn das Druckniveau für unterschiedliche Chargen geändert wird.

Bei einer reinen Füllstandsregelung bei Gießbehältern ist der Behälter offen, sodass lediglich der Füllstand geregelt wird und kein Druck im Behälter.

An dem Behälter können ein Zulaufventil und ein Ablaufventil vorhanden sein oder es kann ein kombiniertes Zu- und Ablaufventil vorhanden sein, um dem Behälter Fluid, insbesondere Flüssigkeit, zu entnehmen bzw. dem Behälter Fluid, insbesondere Flüssigkeit, zuzuführen, wobei der aktuelle Betriebsmodus anhand eines Schaltzustands und/oder Öffnungszustands des mindestens einen Ventils, d. h. daran, ob aktuell eine Fluidentnahme bzw. Zufuhr erfolgt, festgestellt werden kann und basierend auf dem festgestellten Betriebsmodus das I-Glied des Reglers angesteuert wird.

Bei dem kombinierten Zu- und Ablaufventil handelt es sich um ein Ventil, das gleichzeitig als Zulauf und als Ablaufventil fungiert.

Im Falle eines kombinierten Zu- und Ablaufventils ist das Ventil beispielsweise ein 3/3-Wege-Ventil, das beim Befüllen gegen einen hydrostatischen Druck arbeitet. Im Falle von separaten Zu- und Ablaufventilen sind diese beispielsweise als 2/2-Wege-Ventile ausgebildet.

Durch das Auslesen des Schaltzustands bzw. Öffnungszustands des mindestens einen Ventils lässt sich auf besonders einfache Weise feststellen, ob aktuell eine Fluidentnahme oder -zufuhr, beispielsweise eine Flüssigkeitsentnahme oder -zufuhr, erfolgt. Genauer gesagt ist eine direkte und zuverlässige Erkennung des aktuellen Betriebsmodus ohne zusätzliche Sensoren möglich. Die Wahrscheinlichkeit von Fehlinterpretationen oder Verzögerungen bei der Erkennung des Betriebsmodus ist hierbei gering. Der Verzicht auf zusätzliche Sensoren reduziert außerdem die Komplexität der Systemarchitektur.

Wenn das mindestens eine Zu- und/oder Ablaufventil geöffnet ist, erkennt der Regler, dass der erste Betriebsmodus vorliegt und das I-Glied liefert einen Integralanteil zur Stellgröße. Wenn das mindestens Zu- und/oder Ablaufventil geschlossen ist, erkennt der Regler, dass der zweite Betriebsmodus vorliegt und das I-Glied liefert keinen Integralanteil zur Stellgröße. Die Regelstruktur wird folglich dynamisch, insbesondere in Echtzeit, an die aktuelle Prozesssituation angepasst, wodurch die Regelgüte optimiert ist.

Gemäß einem Aspekt erhält der Regler einen Schaltzustand und/oder einen Öffnungszustand des Zulaufventils und des Ablaufventils oder des kombinierten Zu- und Ablaufventils als Eingangsgröße. Indem der Regler unmittelbar Informationen über den Ventilzustand erhält, kann er besonders schnell auf Änderungen im System reagieren. Dies verbessert die dynamische Leistung des Systems und sorgt dafür, dass Sollwerte effizient erreicht und gehalten werden. Das Risiko von Regelungsfehlern aufgrund fehlerhafter Daten ist hierbei reduziert.

Basierend auf dem erfassten Betriebsmodus wird beispielsweise ein binäres Signal erzeugt, das den jeweils aktuellen Betriebsmodus repräsentiert und basierend auf dem das I-Glied des Reglers gesteuert wird. Die direkte Steuerung des I-Glieds des Reglers basierend auf einem einfachen, binären Signal vereinfacht die Regelungstechnik. Hinzu kommt, dass binäre Signale nur ein sehr geringes Risiko für Interpretationsfehler beinhalten.

Der Behälter kann ein geschlossener Behälter sein und der Druck des Druckpolsters im Behälter kann mittels zumindest eines Regelventils eingestellt werden, wobei basierend auf der Stellgröße des Reglers, welche den Öffnungszustand des mindestens einen Regelventils umfasst, und zusätzlich basierend auf einer Regelabweichung ein aktueller Betriebsmodus des Prozesssystems automatisch erkannt werden kann und das I-Glied des Reglers entsprechend dem erkannten Betriebsmodus gesteuert wird. Die Stellgröße des Reglers entspricht dem Ausgangssignal des Reglers.

Die automatische Erkennung des aktuellen Betriebsmodus basierend auf dem Öffnungszustand des mindestens einen Regelventils und der Regelabweichung ermöglicht eine kontinuierliche Überwachung des Prozesssystems, sodass optimal auf Veränderungen reagiert werden kann. Indem ein Betriebsmodus basierend auf der Stellgröße des Reglers und zusätzlich basierend auf der Regelabweichung des mindestens einen Regelventils festgestellt wird, kann auf einen separaten Schalteingang am Regler zur Erfassung eines Zustands des Zu- und/oder Ablaufventils verzichtet werden. Das heißt, dass auch keine Signalleitung von dem Zu- und Ablaufventil zum Regler erforderlich ist. Das Prozesssystem lässt sich auf diese Weise besonders einfach und kostengünstig herstellen.

Beispielsweise ist ein einziges Regelventil in Form eines 3/3-Wege-Ventils vorgesehen oder es sind zwei 2/2-Wege-Ventile vorgesehen.

Gemäß einer weiteren Ausführungsform kann ein Füllstand im Behälter eingestellt werden, wobei basierend auf der Stellgröße des Reglers, welche den Öffnungszustand des Zulaufventils und des Ablaufventils oder des kombinierten Zu- und Ablaufventils umfasst, anders ausgedrückt basierend auf dem Ausgangssignal des Reglers, und zusätzlich basierend auf einer Regelabweichung ein aktueller Betriebsmodus des Prozesssystems automatisch erkannt werden und das I-Glied des Reglers entsprechend dem erkannten Betriebsmodus gesteuert wird. Diese Ausführungsform eignet sich auch für reine Füllstandsregelungen ohne Druckpolsterregelung, insbesondere für offene Behälter.

Der Regler schaltet beispielsweise um, genauer gesagt schaltet der Regler den Integralanteil zu, wenn die Stellgröße des Reglers über einen definierten Zeitraum konstant bleibt und zusätzlich eine anhaltende Regelabweichung vorliegt, beispielsweise über einen Zeitraum von mindestens einer Sekunde, insbesondere über einen Zeitraum von mindestens zehn Sekunden. Die Regelabweichung ist in diesem Fall insbesondere von Null verschieden. In einem beispielhaften Ausführungsbeispiel wird umgeschaltet, wenn die Regelabweichung von Null verschieden ist und über einen Zeitraum von mindestens zehn Sekunden konstant bleibt.

Eine anhaltende Regelabweichung über einen definierten Zeitraum hinweg deutet darauf hin, dass das System möglicherweise dauerhaft fehlerhaft regelt. Durch das automatische Hinzuschalten des Integralanteils kann der Regler solche Abweichungen korrigieren. Wie bereits vorhergehend erläutert, ist dadurch eine Regelgüte erhöht.

Gemäß einem Aspekt wird ein Ist-Wert des Drucks im Behälter mittels eines Drucksensors erfasst und eine Regelabweichung wird als Differenz aus dem Ist-Wert und dem Soll-Wert des Drucks gebildet. Die Bildung der Regelabweichung als Differenz zwischen Ist- und Soll-Wert erlaubt eine unmittelbare Reaktion des Reglers auf Abweichungen. Dies trägt dazu bei, dass das System schnell und effektiv auf Änderungen oder Störungen im Prozess reagieren kann. Durch die kontinuierliche Erfassung der Regelabweichung kann der Regler seine Strategie dynamisch anpassen, um die Effizienz der Druckregelung zu maximieren.

Der Regler führt beispielsweise einen Algorithmus aus, um basierend auf der Stellgröße des Reglers und einer Regelabweichung den aktuellen Betriebsmodus zu erkennen. Der Einsatz eines Algorithmus ermöglicht eine automatisierte und präzise Erkennung des aktuellen Betriebsmodus in Echtzeit. Dies reduziert die Notwendigkeit manueller Eingriffe und minimiert menschliche Fehler, indem der Prozess datengetrieben gesteuert wird. Durch den Einsatz eines Algorithmus wird folglich die Gesamtperformance des Systems verbessert.

Beispielsweise wird zumindest ein Parameter für das I-Glied verändert, wenn der Regler vom ersten, proportionalen Betriebsmodus in den zweiten, integralen Betriebsmodus umgeschaltet wird oder umgekehrt.

Konkret wird die Nachstellzeit verändert, um den Integralanteil des Reglers einzustellen. Die Nachstellzeit bestimmt, wie stark der Integralanteil eines Reglers auf Regelabweichungen reagiert. Je kürzer die Nachstellzeit ist, umso stärker wirkt das I-Glied.

Für den Fall, dass das I-Glied des Reglers keinen Beitrag zur Stellgröße des Reglers leisten soll, wird die Nachstellzeit auf unendlich gesetzt. Das I-Glied ist dadurch effektiv ausgeschaltet und somit inaktiv.

Beträgt die Nachstellzeit weniger als unendlich, ist das I-Glied aktiviert und leistet folglich einen Beitrag zur Stellgröße.

Der jeweils konkrete Wert für die Nachstellzeit bei aktivem I-Glied ist abhängig von einer gewünschten Prozessdynamik und wird vom Anwender ermittelt und eingestellt.

Der vorhergehend beschriebene Vorgang, wonach das I-Glied eingeschaltet oder ausgeschaltet wird, bedeutet somit konkret, dass zwischen einer Nachstellzeit von unendlich und einem vom Anwender festgelegten Wert der Nachstellzeit umgeschaltet wird.

Die Aufgabe wird des Weiteren erfindungsgemäß gelöst durch ein Prozesssystem, insbesondere zum Durchführen eines erfindungsgemäßen Verfahrens, mit einem Behälter, in dem ein Fluid, beispielsweise eine Flüssigkeit und/oder ein Gas, aufgenommen ist, und einem Regler zum Einstellen einer Führungsgröße, insbesondere eines Drucks eines Druckpolsters im Behälter oder eines Füllstands eines in dem Behälter aufgenommenen Fluids, wobei der Regler zumindest ein P-Glied, über das ein Proportionalanteil einer Stellgröße des Reglers eingestellt wird, und ein I-Glied aufweist, über das ein Integralanteil der Stellgröße des Reglers eingestellt wird. Das Prozesssystem ist wahlweise in einem ersten, proportionalen Betriebsmodus oder in einem zweiten, integralen Betriebsmodus betreibbar. Der Regler ist eingerichtet, zu erkennen, ob das Prozesssystem im proportionalen Betriebsmodus oder im integralen Betriebsmodus betrieben wird, und, wenn das Prozesssystem in dem integralen Betriebsmodus betrieben wird, das I-Glied derart zu steuern, dass das I-Glied keinen Beitrag zur Stellgröße des Reglers leistet, und, wenn das Prozesssystem in dem proportionalen Betriebsmodus betrieben wird, das I-Glied derart zu steuern, dass das I-Glied einen Beitrag zur Stellgröße des Reglers leistet.

Wie bereits in Zusammenhang mit dem erfindungsgemäßen Verfahren erläutert, wird durch das erfindungsgemäße Prozesssystem der Vorteil erreicht, dass das Regelverhalten optimiert werden kann, indem immer die am besten zum jeweiligen Betriebsmodus passende Regelstruktur eingestellt ist, sodass die bestmögliche Regelgüte erreicht werden kann.

Weitere Vorteile und Merkmale der Erfindung ergeben sich aus der nachfolgenden Beschreibung und aus den beiliegenden Zeichnungen, auf die Bezug genommen wird. In den Zeichnungen zeigen:
- Figur 1 schematisch ein erfindungsgemäßes Prozesssystem,
- Figur 2 schematisch ein weiteres erfindungsgemäßes Prozesssystem,
- Figur 3 einen Druckverlauf sowie einen Füllstandsverlauf in einem Behälter des erfindungsgemäßen Prozesssystems in einem integralen Betriebsmodus bei einer Regelung mittels einer PD-Regelstruktur,
- Figur 4 einen Druckverlauf sowie einen Füllstandsverlauf in einem Behälter des erfindungsgemäßen Prozesssystems in einem integralen Betriebsmodus bei einer Regelung mittels einer PID-Regelstruktur,
- Figur 5 einen Druckverlauf sowie einen Füllstandsverlauf in einem Behälter des erfindungsgemäßen Prozesssystems in einem proportionalen Betriebsmodus bei einer Regelung mittels einer PID-Regelstruktur, und
- Figur 6 einen Druckverlauf sowie einen Füllstandsverlauf in einem Behälter des erfindungsgemäßen Prozesssystems in einem proportionalen Betriebsmodus bei einer Regelung mittels einer PD-Regelstruktur.

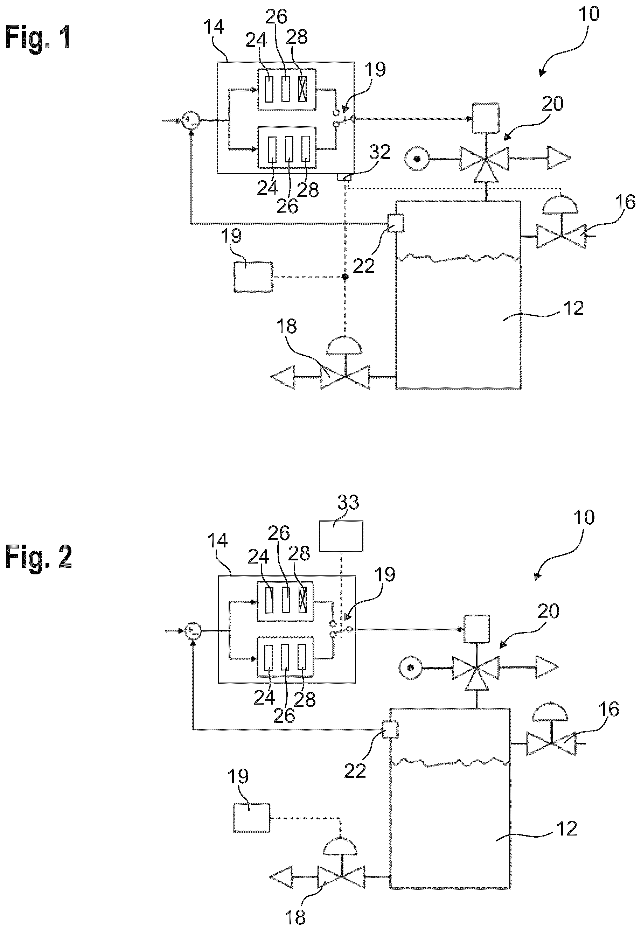

Figur 1 veranschaulicht schematisch ein Prozesssystem 10.

Das Prozesssystem 10 umfasst einen Behälter 12, in dem ein Fluid aufgenommen ist. Beispielsweise sind eine Flüssigkeit und ein Gas im Behälter 12 aufgenommen. In dem Ausführungsbeispiel gemäß Figur 1 ist der Behälter 12 ein geschlossener Behälter.

Zudem umfasst das Prozesssystem 10 einen Regler 14 zum Einstellen einer Führungsgröße, insbesondere eines Drucks eines Druckpolsters im Behälter 12 oder eines Füllstands des in dem Behälter 12 aufgenommenen Fluids.

An dem Behälter 12 sind ein Zulaufventil 16 und ein Ablaufventil 18 vorhanden, die eine Fluidentnahme aus bzw. eine Fluidzufuhr in den Behälter 12 ermöglichen. Das Zulaufventil 16 und das Ablaufventil 18 können als Schaltventile oder als Proportionalventile ausgebildet sein.

Die Ansteuerung des Zulaufventils 16 und des Ablaufventils 18 erfolgt anhand eines Signals 19, das in den Figuren 1 und 2 schematisch veranschaulicht ist, insbesondere mittels einer Steuereinheit, die in den Figuren der Einfachheit halber nicht dargestellt ist.

Anstelle zweier separater Ventile kann auch ein kombiniertes Zu- und Ablaufventil vorgesehen sein.

Außerdem ist ein Regelventil 20 vorhanden, das dazu dient, den Druck eines Druckpolsters im Behälter 12 einzustellen. Das Regelventil 20 ist beispielsweise elektromotorisch, pneumatisch oder hydraulisch angetrieben.

Der Druck im Behälter 12 wird durch einen Drucksensor 22 erfasst. Sofern im Behälter 12 Flüssigkeit enthalten ist, wird der Druck oberhalb des Flüssigkeitspegels erfasst. Der Drucksensor 22 ist mit dem Regler 14 signalübertragend verbunden.

Bei dem Prozesssystem 10 gemäß Figur 1 ist der Regler 14 eingerichtet, das Regelventil 20 anzusteuern, um den Druck im Behälter 12 zu regeln. Ein Öffnungszustand des Regelventils 20 stellt folglich die Stellgröße des Reglers 14 dar.

Der Druck des im Behälter 12 vorhandenen Druckpolsters stellt die Führungsgröße des Reglers 14 dar.

Der Drucksensor 22 führt dem Regler 14 den Ist-Druck im Behälter 12 als Rückführgröße zu, sodass der Regler 14 aus der Führungsgröße und der Rückführgröße eine Regelabweichung bilden kann, insbesondere die Differenz zwischen dem Soll-Wert und dem Ist-Wert des im Behälter 12 herrschenden Drucks.

Der Regler 14 umfasst ein P-Glied 24, ein D-Glied 26 und ein I-Glied 28, wobei der Regler 14 eingerichtet ist, das I-Glied derart zu steuern, dass das I-Glied keinen Beitrag zur Stellgröße des Reglers 14 leistet, was nachfolgend noch im Detail beschrieben wird.

Das Prozesssystem 10 kann wahlweise in zwei unterschiedlichen Betriebsmodi betrieben werden, nämlich in einem ersten, proportionalen Betriebsmodus oder in einem zweiten, integralen Betriebsmodus.

In dem ersten, proportionalen Betriebsmodus wird Fluid, insbesondere Flüssigkeit, aus dem Behälter 12 entnommen, während die Führungsgröße, also der Druck des Druckpolsters, durch die Regelung während der Fluidentnahme konstant gehalten wird. Das Gleiche gilt entsprechend bei der Zufuhr von Fluid.

In dem zweiten, integralen Betriebsmodus erfolgt keine Entnahme von Fluid, insbesondere Flüssigkeit aus dem Behälter 12. Im zweiten Betriebsmodus wird der Druck des Druckpolsters im Behälter 12 folglich bei gleichbleibendem Füllstand geregelt, wobei das Druckniveau im zweiten Betriebsmodus verändert wird, insbesondere erhöht oder gesenkt.

Derartige Betriebszustände treten beispielsweise beim sogenannten Tank-Blanketing auf. Beim Tank-Blanketing enthält der Behälter 12 beispielsweise eine Flüssigkeit sowie ein über der Flüssigkeit vorhandenes Druckpolster.

Wenn das Prozesssystem 10 in dem ersten, proportionalen Betriebsmodus betrieben wird, ist es gewünscht, dass das I-Glied 28 einen Beitrag zur Stellgröße des Reglers 14 leistet.

Wird das Prozesssystem 10 jedoch in dem zweiten, integralen Betriebsmodus betrieben, wirkt sich das I-Glied 28 negativ auf die Regelgüte aus.

Gemäß einem Verfahren zum Betreiben des Prozesssystems 10 ist daher vorgesehen, dass das I-Glied 28 ausgeschaltet werden kann, derart, dass das I-Glied 28 keinen Beitrag zur Stellgröße des Reglers 14 leistet.

In Figur 1 ist diese Umschaltung durch einen Schalter 19 veranschaulicht, der zwischen einem ersten Zustand des Reglers 14, in dem das I-Glied 28 aktiv ist, und einem zweiten Zustand des Reglers 14, in dem das I-Glied 28 inaktiv ist, umschalten kann.

Wie dieses Verfahren im Detail durchgeführt wird, wird im Folgenden beschrieben.

Zunächst muss festgestellt werden, in welchem Betriebsmodus das Prozesssystem 10 aktuell betrieben wird.

Im Ausführungsbeispiel gemäß Figur 1 erfolgt dies dadurch, dass zunächst ein Schaltzustand des Zulaufventils 16 und des Ablaufventils 18 festgestellt wird, und zwar durch den Regler 14. Der Regler 14 umfasst zu diesem Zweck einen Schalteingang 32, der mit dem Zulaufventil 16 und dem Ablaufventil 18 signalübertragend verbunden ist.

Der Regler 14 erhält somit einen Schaltzustand und/oder einen Öffnungszustand des Zulaufventils 16 und des Ablaufventils 18 als Eingangsgröße.

Wenn das Zulaufventil 16 und/oder das Ablaufventil 18 geöffnet sind, erkennt der Regler 14, dass das Prozesssystem 10 aktuell in dem ersten, proportionalen Betriebsmodus betrieben wird.

Wenn das Zulaufventil 16 und das Ablaufventil 18 geschlossen sind, erkennt der Regler 14, dass das Prozesssystem 10 aktuell in dem zweiten, integralen Betriebsmodus betrieben wird.

Der Betriebsmodus wird somit vom Regler 14 automatisch erkannt.

Erfolgt ein Wechsel vom ersten, proportionalen Betriebsmodus in den zweiten, integralen Betriebsmodus, schaltet der Regler 14 das I-Glied 28 aus, sodass es keinen Beitrag mehr zur Stellgröße leistet.

Umgekehrt schaltet der Regler 14 das I-Glied 28 beim Wechsel vom zweiten, integralen Betriebsmodus in den ersten, proportionalen Betriebsmodus ein, sodass das I-Glied 28 wieder einen Beitrag zur Stellgröße leistet.

Basierend auf dem erfassten Betriebsmodus wird ein binäres Signal erzeugt, das den jeweils aktuellen Betriebsmodus repräsentiert und basierend auf dem das I-Glied 28 des Reglers 14 gesteuert wird. Konkret erzeugt der Regler 14 das binäre Signal.

Wenn der Regler 14 vom ersten, proportionalen Betriebsmodus in den zweiten, integralen Betriebsmodus umgeschaltet wird oder umgekehrt, wird zumindest ein Parameter für das I-Glied 28 verändert. Im Ausführungsbeispiel gemäß Figur 1 erfolgt dies durch das binäre Signal.

Konkret wird eine Nachstellzeit verändert, um das I-Glied des Reglers 14 einzuschalten bzw. auszuschalten.

Beim Wechsel vom ersten, proportionalen Betriebsmodus in den zweiten, integralen Betriebsmodus wird die Nachstellzeit auf unendlich gesetzt. Das I-Glied 28 ist dadurch effektiv ausgeschaltet und somit inaktiv, das heißt, es leistet keinen Beitrag zur Stellgröße.

Beim Wechsel vom zweiten, integralen Betriebsmodus in den ersten, proportionalen Betriebsmodus wird das I-Glied 28 wieder aktiviert, was dadurch erfolgt, dass die Nachstellzeit auf einen definierten Wert eingestellt wird, der kleiner ist als unendlich. Denkbar sind beispielsweise Werte zwischen 0,1 und 100.

Figur 2 veranschaulicht schematisch ein weiteres Prozesssystem 10. Das Prozesssystem gemäß Figur 2 unterscheidet sich von dem in Figur 1 veranschaulichten Prozesssystem 10 dadurch, dass keine signalübertragende Verbindung zwischen dem Zulaufventil 16 und dem Ablaufventil 18 und dem Regler 14 vorliegt und der Regler 14 folglich den Schaltzustand und/oder den Öffnungszustand des Zulaufventils 16 und des Ablaufventils 18 nicht als Eingangsgröße erhält.

Der jeweils aktuelle Betriebsmodus lässt sich folglich nicht anhand des Schaltzustands und/oder eines Öffnungszustands des Zulaufventils 16 und des Ablaufventils 18 feststellen.

Stattdessen erfolgt die Feststellung des aktuellen Betriebsmodus basierend auf der Stellgröße des Reglers 14, welche den Öffnungszustand des mindestens einen Regelventils 20 umfasst, anders ausgedrückt basierend auf dem Ausgangssignal des Reglers 14, und zusätzlich basierend auf einer Regelabweichung, also einer Differenz zwischen dem Ist-Wert und dem Soll-Wert des im Behälter 12 herrschenden Drucks.

Auch hier wird der Betriebszustand automatisch erkannt.

Beispielsweise führt der Regler 14 einen Algorithmus aus, welcher auf einem Prozessor 33 hinterlegt sein kann, um basierend auf der Stellgröße des Reglers und einer Regelabweichung den aktuellen Betriebsmodus zu erkennen.

Beispielsweise schaltet der Regler 14 um, wenn die Stellgröße des Reglers 14 über einen definierten Zeitraum konstant bleibt und zusätzlich eine anhaltende Regelabweichung vorliegt.

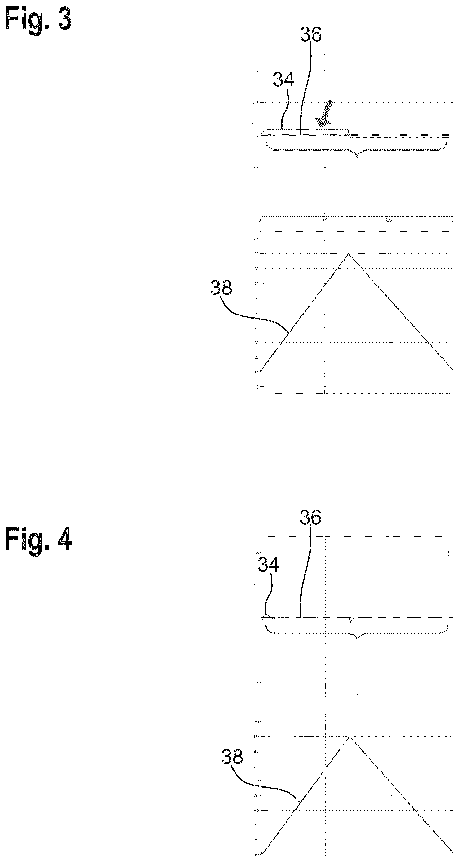

Dieser Vorgang wird im Detail anhand der Figuren 3 bis 6 erläutert.

Die Figuren 3 bis 6 zeigen jeweils einen Druckverlauf eines im Behälter 12 vorliegenden Ist-Drucks anhand der Kurve 34, einen Soll-Druck anhand der Kurve 36 und einen Füllstandsverlauf im Behälter 12 anhand der Kurve 38.

Der Druck ist jeweils in bar aufgetragen und der Füllstand in %.

Die Figuren 3 und 4 veranschaulichen jeweils den ersten, proportionalen Betriebsmodus, in dem Fluid, insbesondere Flüssigkeit, aus dem Behälter entnommen wird, was anhand des variierenden Füllstands ersichtlich ist, während die Führungsgröße, also der im Behälter 12 herrschende Druck, durch die Regelung konstant gehalten wird.

Das Regelventil 20 ist in diesem Zustand geöffnet, um den Druck des Druckpolsters trotz des variierenden Füllstands konstant zu halten.

Die Information über den Öffnungszustand, insbesondere auch der Öffnungsgrad, also wie weit das Regelventil 20 geöffnet ist, liegen dem Regler 14 vor, da die Ansteuerung des Regelventils 20 durch den Regler 14 selbst erfolgt.

Darüber hinaus bildet der Regler 14 kontinuierlich die Regelabweichung, d. h. die Differenz zwischen dem vom Drucksensor 22 erfassten Ist-Wert des Drucks und dem Soll-Wert des Drucks.

Basierend auf dem Öffnungszustand des Regelventils 20 und zusätzlich basierend auf der Regelabweichung wird ein aktueller Betriebsmodus des Prozesssystems 10 automatisch erkannt.

Bei dem in Figur 3 veranschaulichten Zustand ist das I-Glied 28 des Reglers 14 deaktiviert, was zu der anhaltenden, von Null verschiedenen Regelabweichung führt.

Wenn der erste Betriebsmodus festgestellt wurde und nicht die optimale Regelstruktur eingestellt ist, schaltet der Regler 14 um, das heißt das I-Glied 28 des Reglers 14 wird entsprechend dem erkannten Betriebsmodus gesteuert.

Bei dem in Figur 3 veranschaulichten Szenario ist die Regelabweichung über einen längeren Zeitraum, insbesondere über einen Zeitraum von mehr als einer Minute, konstant.

Liegt das Szenario gemäß Figur 3 vor, schaltet der Regler 14 das I-Glied 28 zu.

Bei dem in Figur 4 veranschaulichten Szenario liegt ebenfalls der erste Betriebsmodus vor. Allerdings ist bei dem in Figur 4 veranschaulichten Verlauf das I-Glied 28 bereits zugeschaltet, sodass es nicht zu einer anhaltenden Regelabweichung kommt. In diesem Fall tritt eine Regelabweichung lediglich kurzzeitig in Form eines geringfügigen Überschwingens beim Umschalten zwischen einem Befüllmodus und einem Entnahmemodus auf.

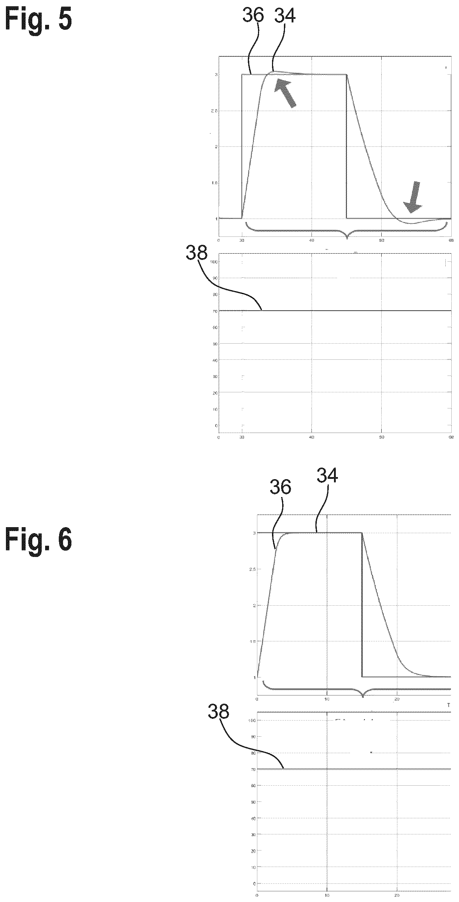

Die Figuren 5 und 6 veranschaulichen jeweils den zweiten, integralen Betriebsmodus. In diesem Betriebsmodus wird kein Fluid, insbesondere keine Flüssigkeit, aus dem Behälter 12 entnommen, das heißt der Füllstand der Flüssigkeit bleibt konstant, während der Druck variiert wird.

In dem in Figur 5 veranschaulichten Szenario ist das I-Glied 28 des Reglers 14 aktiviert. Dies führt zu einem deutlichen Überschwingen des Druckniveaus beim Einregeln des Drucks.

Auch in diesem Fall erkennt der Regler 14 anhand des Öffnungszustands des Regelventils 20 und anhand der Regelabweichung, die im Ausführungsbeispiel gemäß Figur 5 für ca. 10 bis 15 Sekunden vorliegt, welcher Betriebsmodus aktuell herrscht.

Um das Druckniveau überschwingungsfrei einregeln zu können, schaltet der Regler 14 das I-Glied 28 ab, wenn erkannt wurde, dass der zweite Betriebsmodus vorliegt.

Das Verfahren sowie das Prozesssystem wurden vorhergehend in Zusammenhang mit dem Anwendungsfall des Tank-Blanketings beschrieben.

Es sind jedoch auch andere Anwendungsfälle denkbar.

Beispielsweise kann das Verfahren auch in Zusammenhang mit einer Füllstandsregelung in einem offenen Behälter eingesetzt werden.

In diesem Fall stellt ein Füllstand die Führungsgröße des Reglers 14 dar.

Die Stellgröße des Reglers 14 umfasst in diesem Fall einen Öffnungszustand des Zulaufventils 16 und des Ablaufventils 18 oder eines kombinierten Zu- und Ablaufventils.

Basierend auf der Stellgröße des Reglers 14 und zusätzlich basierend auf einer Regelabweichung, also der Differenz zwischen einem Ist-Füllstand und einem Soll-Füllstand, lässt sich auch in diesem Fall ein aktueller Betriebsmodus des Prozesssystems 10 automatisch erkennen und das I-Glied 28 des Reglers 14 wird entsprechend dem erkannten Betriebsmodus gesteuert.

Der erste Betriebsmodus ist hierbei beispielsweise ein proportionaler Betriebsmodus, in dem der Füllstand im Behälter 12 während einer Fluidentnahme und/oder Zufuhr konstant gehalten wird.

Der zweite Betriebsmodus ist beispielsweise ein integraler Betriebsmodus, in dem der Füllstand konstant gehalten wird, ohne dass eine Entnahme von Fluid erfolgt.

## Patentansprüche

1. Verfahren zum Betreiben eines Prozesssystems (10) zur Druckpolsterregelung oder Füllstandsregelung in einem Behälter (12), in dem ein Fluid, beispielsweise eine Flüssigkeit und/oder ein Gas, aufgenommen ist, mit einem Regler (14) zum Einstellen einer Führungsgröße, insbesondere eines Drucks eines Druckpolsters im Behälter (12) oder eines Füllstands eines in dem Behälter (12) aufgenommenen Fluids, wobei der Regler zumindest ein P-Glied (24), über das ein Proportionalanteil einer Stellgröße des Reglers (14) eingestellt wird, und ein I-Glied (28) aufweist, über das ein Integralanteil der Stellgröße des Reglers (14) eingestellt wird,
wobei das Prozesssystem (10) wahlweise in einem ersten, proportionalen Betriebsmodus oder in einem zweiten, integralen Betriebsmodus betrieben wird,
wobei das I-Glied (28) des Reglers (14) keinen Beitrag zur Stellgröße des Reglers (14) leistet, wenn das Prozesssystem (10) in dem zweiten, integralen Betriebsmodus betrieben wird, und das I-Glied (28) des Reglers (14) einen Beitrag zur Stellgröße des Reglers (14) leistet, wenn das Prozesssystem (10) in dem ersten, proportionalen Betriebsmodus betrieben wird.

2. Verfahren nach Anspruch 1, **dadurch gekennzeichnet, dass** in dem ersten, proportionalen Betriebsmodus Fluid, insbesondere Flüssigkeit, aus dem Behälter (12) entnommen oder dem Behälter (12) zugeführt wird, während die Führungsgröße durch die Regelung konstant gehalten wird, und in dem zweiten, integralen Betriebsmodus keine Entnahme aus dem Behälter (12) erfolgt.

3. Verfahren nach einem der vorhergehenden Ansprüche, **dadurch gekennzeichnet, dass** in dem ersten Betriebsmodus der Druck des Druckpolsters im Behälter (12) während der Fluidentnahme, insbesondere während einer Flüssigkeitsentnahme, durch die Regelung konstant gehalten wird und im zweiten Betriebsmodus der Druck des Druckpolsters im Behälter (12) bei gleichbleibendem Füllstand geregelt wird, insbesondere wobei im zweiten Betriebsmodus ein Druckniveau verändert wird.

4. Verfahren nach einem der vorhergehenden Ansprüche, **dadurch gekennzeichnet, dass** an dem Behälter (12) ein Zulaufventil (16) und ein Ablaufventil (18) vorhanden sind oder ein kombiniertes Zu- und Ablaufventil vorhanden ist, um dem Behälter (12) Fluid zu entnehmen bzw. dem Behälter (12) Fluid zuzuführen, wobei der aktuelle Betriebsmodus anhand eines Schaltzustands und/oder Öffnungszustands des mindestens einen Ventils (16, 18) festgestellt wird und basierend auf dem festgestellten Betriebsmodus das I-Glied (28) des Reglers (14) angesteuert wird.

5. Verfahren nach Anspruch 4, **dadurch gekennzeichnet, dass** der Regler (14) einen Schaltzustand und/oder einen Öffnungszustand des Zulaufventils (16) und des Ablaufventils (18) oder des kombinierten Zu- und Ablaufventils als Eingangsgröße erhält.

6. Verfahren nach Anspruch 4 oder 5, **dadurch gekennzeichnet, dass** basierend auf dem erfassten Betriebsmodus ein binäres Signal erzeugt wird, das den jeweils aktuellen Betriebsmodus repräsentiert und basierend auf dem das I-Glied (28) des Reglers (14) gesteuert wird.

7. Verfahren nach einem der vorhergehenden Ansprüche, **dadurch gekennzeichnet, dass** der Behälter (12) ein geschlossener Behälter (12) ist und der Druck des Druckpolsters im Behälter (12) mittels zumindest eines Regelventils (20) eingestellt wird, wobei basierend auf der Stellgröße des Reglers (14), welche den Öffnungszustand des mindestens einen Regelventils (20) umfasst, und zusätzlich basierend auf einer Regelabweichung ein aktueller Betriebsmodus des Prozesssystems (10) automatisch erkannt wird und das I-Glied (28) des Reglers (14) entsprechend dem erkannten Betriebsmodus gesteuert wird.

8. Verfahren nach einem der Ansprüche 4 bis 6, **dadurch gekennzeichnet, dass** ein Füllstand im Behälter (12) eingestellt wird, wobei basierend auf der Stellgröße des Reglers (14), welche den Öffnungszustand des Zulaufventils (16) und des Ablaufventils (18) oder des kombinierten Zu- und Ablaufventils umfasst, und zusätzlich basierend auf einer Regelabweichung ein aktueller Betriebsmodus des Prozesssystems (10) automatisch erkannt wird und das I-Glied (28) des Reglers (14) entsprechend dem erkannten Betriebsmodus gesteuert wird.

9. Verfahren nach Anspruch 7 oder 8, **dadurch gekennzeichnet, dass** der Regler (14) umschaltet, wenn die Stellgröße des Reglers (14) über einen definierten Zeitraum konstant bleibt und zusätzlich eine anhaltende Regelabweichung vorliegt.

10. Verfahren nach einem der vorhergehenden Ansprüche, **dadurch gekennzeichnet, dass** ein Ist-Wert des Drucks im Behälter (12) mittels eines Drucksensors (22) erfasst wird und eine Regelabweichung als Differenz aus dem Ist-Wert und dem Soll-Wert des Drucks gebildet wird.

11. Verfahren nach einem der vorhergehenden Ansprüche, **dadurch gekennzeichnet, dass** der Regler (14) einen Algorithmus ausführt, um basierend auf der Stellgröße des Reglers (14) und einer Regelabweichung den aktuellen Betriebsmodus zu erkennen.

12. Verfahren nach einem der vorhergehenden Ansprüche, **dadurch gekennzeichnet, dass** zumindest ein Parameter für das I-Glied (28) verändert wird, wenn der Regler (14) vom ersten, proportionalen Betriebsmodus in den zweiten, integralen Betriebsmodus umgeschaltet wird oder umgekehrt.

13. Prozesssystem, (10) insbesondere zum Durchführen eines Verfahrens gemäß einem der vorhergehenden Ansprüche, mit einem Behälter (12), in dem ein Fluid, beispielsweise eine Flüssigkeit und/oder ein Gas, aufgenommen ist, und einem Regler (14) zum Einstellen einer Führungsgröße, insbesondere eines Drucks eines Druckpolsters im Behälter (12) oder eines Füllstands eines in dem Behälter aufgenommenen Fluids, wobei der Regler (14) zumindest ein P-Glied (24), über das ein Proportionalanteil einer Stellgröße des Reglers (14) eingestellt wird, und ein I-Glied (28) aufweist, über das ein Integralanteil der Stellgröße des Reglers (14) eingestellt wird,
wobei das Prozesssystem (10) wahlweise in einem ersten, proportionalen Betriebsmodus oder in einem zweiten, integralen Betriebsmodus betreibbar ist,
wobei der Regler (14) eingerichtet ist, zu erkennen, ob das Prozesssystem (10) im proportionalen Betriebsmodus oder im integralen Betriebsmodus betrieben wird, und, wenn das Prozesssystem (10) in dem integralen Betriebsmodus betrieben wird, das I-Glied (28) derart zu steuern, dass das I-Glied (28) keinen Beitrag zur Stellgröße des Reglers (14) leistet, und, wenn das Prozesssystem (10) in dem proportionalen Betriebsmodus betrieben wird, das I-Glied (28) derart zu steuern, dass das I-Glied (28) einen Beitrag zur Stellgröße des Reglers (14) leistet.
